# FASCICULE DE BREVET EUROPEEN

(11) **EP 4 470 650 B1**
(45) Date de publication et mention de la délivrance du brevet: **01.10.2025**
(21) Numéro de dépôt: 24177113.8
(22) Date de dépôt: 21.05.2024
(51) Int. Cl.: B01D 46/00

(54) **FILTRE A AIR AVEC SYSTEME D'ATTACHE DE COUVERCLE ET PROCEDE D'ASSEMBLAGE D'UN TEL FILTRE**
LUFTFILTER MIT DECKELBEFESTIGUNGSSYSTEM UND VERFAHREN ZUR MONTAGE EINES SOLCHEN FILTERS
AIR FILTER WITH COVER ATTACHMENT SYSTEM AND METHOD FOR ASSEMBLING SUCH A FILTER

(30) Priorité: 31.05.2023 FR 2305401
(43) Date de publication de la demande: 04.12.2024
(73) Titulaire: Purflux Filtration, 78280 Guyancourt (FR)
(72) Inventeur: LE MOUELLIC, Bruno, 14500 VIRE (FR)
(74) Mandataire: Plasseraud IP

(56) Documents cités:
- EP-A1- 3 922 338
- US-A- 5 167 683
- US-A- 5 391 212
- US-B1- 6 231 630
- US-B1- 6 306 192
- US-B2- 8 394 159

## Description

### Domaine technique

L'invention concerne le domaine des filtres à air, notamment les filtres destinés à l'air d'aspiration de moteurs à combustion interne ou d'une pile à combustible d'un véhicule automobile. La présente divulgation se rapporte plus particulièrement à un filtre à air ayant deux parties de boîtier assemblées par un ensemble d'attache. Elle concerne aussi un procédé d'assemblage d'un filtre à air.

### Technique antérieure

Dans des filtres à air pour véhicule motorisé, il est habituel de loger un élément filtrant à l'intérieur d'un boîtier réutilisable dont le couvercle se verrouille rapidement. Il est par exemple connu du document US 7976604 l'utilisation d'au moins un clip de retenue à dégagement rapide, se verrouillant par pivotement en reliant entre elles deux parties de boîtier superposées. Un serrage entre ces deux parties peut être obtenu en utilisant par exemple trois clips. Les zones de serrage sont multiples afin d'éviter les risques de fuite d'air et d'admission d'air chaud, ce qui peut perturber le fonctionnement du moteur. Le document US 8394159 montre aussi un assemblage du boîtier de filtre utilisant au moins un clip sur un côté pour verrouiller la position d'obturation du couvercle.

Dans les cas de montage sous le capot moteur ou dans une zone similaire fortement encombrée, il n'est pas toujours permis d'ouvrir rapidement le boîtier pour une opération de maintenance, par exemple pour un changement de l'élément filtrant. Il existe un besoin pour faciliter l'ouverture du boîtier pour l'opérateur.

### Résumé

Afin d'améliorer la situation, il est proposé un dispositif de filtration d'air pour véhicule motorisé, le dispositif incluant une entrée pour l'admission d'un flux d'air brut et une sortie pour l'évacuation d'air purifié, le dispositif comprenant :
- un élément filtrant ;
- un composant de boîtier présentant un fond, une paroi latérale, l'entrée et une extrémité supérieure avec une ouverture délimitée par une bordure annulaire, l'ouverture étant opposée au fond et permettant à l'élément filtrant d'être inséré dans le composant de boîtier ;
- un couvercle permettant d'obturer l'ouverture en formant une jonction avec la bordure, le couvercle étant relié au composant de boîtier par une liaison à charnière formant un premier système d'attache, le couvercle ayant une partie d'obturation de l'ouverture avec une face de dessus qui forme la région de la partie d'obturation qui est la plus éloignée de l'ouverture ; et
- un deuxième système d'attache pourvu d'un élément fermoir dont une partie est portée par le couvercle en étant apte à coopérer avec le composant de boîtier dans une configuration de verrouillage dans laquelle cette partie portée par le couvercle est engagée par le dessous contre un bord de prise prévu dans le composant de boîtier ;
avec la particularité que l'élément fermoir, qui s'étend entièrement au-dessus de la jonction, est apte à exercer, dans la configuration de verrouillage, une action de serrage entre le composant de boîtier et le couvercle, l'élément fermoir incluant :
- une portion inférieure d'ancrage pour le contact avec le bord de prise ; et
- une portion supérieure d'actionnement adaptée pour déplacer, de préférence en la faisant pivoter, la portion inférieure d'ancrage,
la portion supérieure d'actionnement faisant saillie vers le haut en s'étendant, dans la configuration de verrouillage, plus près de la face de dessus du couvercle que de la jonction et/ou radialement vers l'intérieur avec une accessibilité par le dessus.

Grâce à ces dispositions, un opérateur de maintenance dispose de partie(s) actionnable(s) pour déverrouiller manuellement le couvercle qui peuvent être aisément/directement accessible(s) sur le dessus du couvercle en permettant une action de serrage à l'état verrouillé sur un côté donné du couvercle, par exemple pour écraser un joint, même lorsque l'encombrement au voisinage du boitier empêche tout accès latéral sur ce côté donné. La face de dessus peut constituer un sommet du couvercle, qui par exemple creux avec au moins une partie bombée, éventuellement du côté de la sortie.
Le composant de boîtier, typiquement sous-jacent au couvercle, présente une portion supérieure annulaire qui définit l'ouverture (ouverture axiale supérieure) obturée par le couvercle et au travers de laquelle les moyens de séparation sont insérés avant une obturation par le couvercle.

La portion supérieure d'actionnement peut faire saillie au-dessus du couvercle, par exemple de sorte que l'actionnement du déverrouillage au niveau de cet élément nécessite un faible abaissement de la main de l'opérateur par comparaison à l'action pour relever ensuite le couvercle déverrouillé.

Dans des options, la face de dessus peut se connecter à une paroi latérale du couvercle (paroi de section rectangulaire par exemple) par une ou plusieurs zones de transition à profil courbé et formant chacune une portion de surface externe convexe, facilitant le basculement radial vers l'intérieur de la portion supérieure d'actionnement. Avec ce basculement et si la portion d'ancrage a été préalablement placée sous le bord de prise, on peut placer la portion supérieure d'actionnement dans une position prédéterminée verrouillant l'engagement de la portion inférieure d'ancrage sous le bord de prise.

Dans des modes de réalisation du dispositif, on peut avoir recours à une ou plusieurs des particularités suivantes :
- le bord de prise est prévu dans une extension inclue dans le composant de boîtier, cette extension recouvrant latéralement une région du couvercle lorsque ce dernier est fermé.
- deux extensions, parallèle entre elles, peuvent être prévues dans le composant de boîtier, de façon à s'étendre de part et d'autre du couvercle lorsque ce dernier est abaissé via la liaison à charnière et obture l'ouverture de l'extrémité supérieure du composant de boîtier.
- au moins une zone convexe, formant une transition entre une bride du couvercle et une face de dessus du couvercle, est prévue, la portion supérieur d'actionnement étant disposée en recouvrement/chevauchement de cette zone de transition convexe.

- le couvercle dispose de zones de transition convexes qui forment chacune une rampe/surface de guidage convexe sur laquelle un doigt de l'utilisateur peut glisser pour passer sous la portion d'actionnement en facilitant l'action de déverrouillage.
- la portion supérieure d'actionnement est une portion à cliquet.
- la portion supérieure d'actionnement s'étend au-dessus de la sortie et/ou de façon à être en chevauchement par le dessus du couvercle, dans la configuration de verrouillage.

Le couvercle peut fournir deux régions de fixation ou parties réceptrices, afin de distribuer deux organes de verrouillage sur deux côtés distincts du couvercle, en ayant sur chacun de ces organes, une extrémité d'actionnement qui atteint ou dépasse par le haut un sommet du couvercle ou une sortie du couvercle.
Le deuxième système d'attache peut comporter l'élément fermoir en tant que premier élément de verrouillage (avec son extrémité d'actionnement constituant un point haut de ce premier élément) et comporte un deuxième élément de verrouillage (avec aussi son extrémité d'actionnement constituant un point haut de ce deuxième élément) disposant aussi d'une portion inférieure d'ancrage et d'une portion supérieure d'actionnement, en particulier du type à cliquet, adaptée pour déplacer, de préférence en la faisant pivoter, la partie inférieure d'ancrage du deuxième élément de verrouillage.

Optionnellement, la bordure du composant de boîtier présente deux côtés, distincts d'un autre côté pourvu de la liaison à charnière, sur lesquels sont distribués deux parties réceptrices, pour l'engagement respectivement avec l'une et l'autre des portions inférieures d'ancrage du premier élément de verrouillage et du deuxième élément de verrouillage.
La portion inférieure d'ancrage peut être au moins deux fois plus longue que large. Lorsqu'on prévoit au moins un étrier en tant que partie réceptrice, pour former un bord de prise, la portion inférieure d'ancrage peut se présenter sous forme d'un cavalier (en forme de U) avec une extrémité en crochet. Avec deux étriers (chacun en U inversé), il peut être prévu deux portions inférieures formant chacune un cavalier, par exemple uniquement sur deux côtés (côtés perpendiculaires à la liaison charnière dans des options permettant de bien répartir le serrage). Un joint de l'élément filtrant (incluant les moyens de séparation) peut être en sandwich lorsque les cavaliers sont en prise avec les étriers et l'étanchéité est alors assurée entre la zone d'amont et la zone d'aval dans la chambre de filtration.

Le bord de prise peut faire la jonction entre deux jambes d'un pontet constitutif de l'étrier de fixation. Dans chacun des pontets, la configuration avec deux jambes de force permet une transmission du mouvement de fermeture sur le composant de boîtier. Plus largement, la fermeture réalisée par le bras de levier des clips fil ou éléments fermoirs similaires permet de comprimer le couvercle sur le composant/corps de boîtier, en multipliant éventuellement les points/régions de transfert d'efforts lorsque chaque bord de prise est délimité entre des jambes solidaires du composant de boîtier.

Dans un type de réalisation, la sortie est formée sur le couvercle. Il peut être prévu au moins dans ce cas une ou plusieurs des dispositions suivantes :
- la sortie, par exemple réalisée de façon tubulaire, est située à l'opposé de la liaison à charnière.
- la portion supérieure d'actionnement s'étend au moins partiellement au-dessus de/plus haut que la sortie.
- la portion supérieure d'actionnement est montée sur un axe de pivotement qui s'étend plus haut qu'une face de sortie de l'élément filtrant qui est orientée à l'opposé du fond du composant de boîtier.
- la sortie est prévu sélectivement sur un côté du couvercle.
- il est prévu une ou deux portions supérieures d'actionnement fixées chacune sur un côté du couvercle espacé de la liaison à charnière et/ou distinct du côté où s'étend la sortie.

Selon une particularité du couvercle, celui-ci est bombé au moins sur un côté opposé à la liaison à charnière. Le couvercle peut inclure un moyen de fixation sur lequel est montée, pivotante, la portion supérieure d'actionnement. Le moyen de fixation peut former une prise femelle pour raccorder au moins une extrémité mâle de la portion supérieure d'actionnement. Le moyen de fixation peut être disposé sur une portion convexe du couvercle qui s'écarte radialement vers l'intérieur par rapport à une bride de fixation formée sur le couvercle.

Lorsque le couvercle est disposé dans une configuration de fermeture (par abaissement de ce couvercle en utilisant la liaison à charnière), la partie d'actionnement est mobile entre une position reculée (radialement décalée vers l'extérieur par exemple), dans laquelle la partie d'ancrage peut se désengager du bord de prise par rapport au couvercle et une position rapprochée.

Dans des réalisations, on a recours à l'une au moins des caractéristiques suivantes :
- le bord de prise est formé dans un étrier de fixation qui fait saillie en direction opposée au fond, de sorte que le bord de prise est décalé verticalement plus haut que la jonction (et typiquement plus haut que n'importe quelle partie de la bordure annulaire).
- le moyen de fixation est formé sur ou adjacent à une région bombée du couvercle, par exemple ayant une forme partiellement courbée (et arrondie) autour d'une direction perpendiculaire à un axe de la liaison à charnière.
- le bord de prise est réalisé dans un matériau plastique inclus également dans le ou constitutif du composant de boîtier.
- la portion inférieure d'ancrage est métallique.
- la portion supérieur d'ancrage est métallique.
- la portion inférieure d'ancrage et la portion supérieure d'actionnement (ont chacune une structure filaire, de préférence métallique.
- la portion supérieure d'actionnement présente deux extrémités recourbées l'une vers l'autre qui sont reçues par une prise femelle formée par le couvercle et/ou dans un logement prévu à l'extrémité de fixation supérieure d'un support nervuré formé comme un relief radialement saillant sur une paroi latérale du couvercle.
- le support nervuré inclut au moins une nervure du couvercle qui s'étend vers le bas, depuis l'extrémité de fixation supérieure, en direction d'une bride du couvercle.
- la bride du couvercle est chevauchée, extérieurement sur sa périphérie (périphérie typiquement annulaire de la bride), par l'étrier de fixation dans la position fermée du couvercle.
- l'étrier de fixation se raccorde sur la bride du composant de boîtier, dans laquelle vient s'engager, typiquement en s'emboitant intérieurement, la bride du couvercle.
- la bride du couvercle peut être pourvue d'un profil concave tourné vers le haut, en formant une gorge supérieure sur le dessus de la bride.
- le support nervuré peut optionnellement rejoindre la gorge supérieure, tandis que l'étrier s'étend parallèlement au et en regard du support nervuré, dans la position fermée du couvercle.

Dans des exemples de conception, le couvercle et le composant de boîtier constituent un boîtier de délimitation d'une chambre de filtration. La sortie peut être disposée sur le couvercle, à l'opposé de la liaison à charnière, en étant par exemple coudée. La sortie permet à un flux d'air purifié ressortant de l'élément filtrant de quitter la chambre de filtration, optionnellement en dirigeant ce flux sortant du même côté du boîtier que celui incluant l'entrée. L'élément filtrant est par exemple distal de la face de dessus du boîtier. Dans un creux du couvercle, une zone de la chambre de filtration qui est une zone en aval de l'élément filtrant peut être délimitée, typiquement sous la face de dessus, en communiquant avec la sortie.

Plus largement, une zone d'aval (en aval des moyens de séparation) peut être délimitée entre une face intérieure du couvercle et une face de sortie de l'élément filtrant, sachant que la portion supérieure d'actionnement se raccorde au couvercle sur une portion de paroi incluant la face intérieure du couvercle et distale de la face de sortie. Une portion annulaire de couvercle peut constituer une région de transition/séparation entre une bride du couvercle et une portion haute de couvercle permettant le raccordement de l'élément de verrouillage ou partie supérieure d'actionnement, cette portion haute ayant par exemple une face intérieure verticalement en regard de l'ouverture. Cette portion haute peut être convexe et adjacente à une dépression dont le fond constitue une portion basse du couvercle formée entre la liaison à charnière et cette portion haute.

Dans des réalisations, un élément filtrant amovible inclut les moyens de séparation et présente une ou plusieurs des particularités suivantes :
- l'élément filtrant est reçu de manière amovible dans le composant de boîtier, par exemple en utilisant un joint comme partie de contact avec un support circonférentiel prévu intérieurement dans le composant de boîtier.
- l'élément filtrant dispose de moyens de séparation qui sont adaptés pour retenir les particules et les poussières en laissant passer un flux d'air purifié en direction de la sortie, un des médias pouvant être plissé.
- les moyens de séparation sont disposés plus bas que le bord de prise sur lequel viens s'engager la portion inférieure d'ancrage, dans la configuration de verrouillage.

- ladite face de sortie (de l'élément filtrant, typiquement formée par les moyens de séparation) s'étend plus bas que le bord de prise tout en s'étendant (au moins pour partie) dans un creux du couvercle.
- l'élément filtrant présente une première face disposée en regard du fond et formant une face d'entrée (par exemple opposée à la face de sortie de l'élément filtrant) qui peut correspondre au bas de l'élément filtrant à l'état monté dans le composant de boîtier.
- l'élément filtrant inclut un cadre de support pouvant former une circonférence extérieure de l'élément filtrant, ainsi qu'un premier média filtrant et un deuxième média filtrant qui sont typiquement entouré par le cadre de support.
- le premier média et le deuxième média peuvent être répartis de part et d'autre d'une portion annulaire du cadre de support, par exemple en faisant saillie hors du cadre de part et d'autre de ce dernier.
- le cadre de support est lié de façon étanche à la fois : au premier média, via une première couche annulaire de fixation, située à l'opposé de la première face qui appartient au premier média filtrant ; et au deuxième média, via une deuxième couche annulaire de fixation, située à l'opposé de la deuxième face qui appartient au deuxième média filtrant.
- le cadre peut présenter une paroi latérale à au moins quatre côtés et un rebord interne annulaire formant un support par le dessous du deuxième média filtrant qui peut optionnellement s'étendre dans un creux du couvercle.

Dans des réalisations du couvercle, on peut utiliser une ou plusieurs des dispositions suivantes :
- le couvercle comprend la sortie, qui est par exemple configurée pour être entièrement décalée (plus haut) qu'une bride annulaire (par exemple rectangulaire) du couvercle.
- la liaison à charnière s'étend le long d'un côté du couvercle
- la sortie est sous la forme d'une paroi tubulaire ou col qui fait saillie radialement vers l'extérieur, optionnellement en étant orientée sur un côté qui est aussi celui par laquelle l'entrée est alimenté en air brut.
- le col est rigide ou semi-rigide et peut présenter, latéralement, une douille pour recevoir un capteur de flux d'air tel qu'un débitmètre massique d'air (appelé MAF pour « Mass Air Flow »).
- la douille et un ou deux éléments fermoirs sont formés dans une même moitié du couvercle qui est distale de la charnière.
- l'entrée est adjacente à un côté du boîtier sur lequel est formé la charnière.

Le boîtier peut présenter une jonction entre la base et le couvercle qui est inclinée vers le bas depuis la charnière, par exemple de façon que deux bords inférieurs du couvercle s'éloignent chacun davantage d'un plan virtuel passant par la sortie et la charnière, au fur et à mesure qu'on s'éloigne (vers le bas) de la charnière.

Selon une particularité, le boîtier est pourvu d'un couvercle portant la sortie et fixé de manière amovible sur une portion supérieure annulaire prévue sur une pièce constituant le composant de boîtier. Le couvercle peut être fixé sélectivement au seul composant de boîtier. Le couvercle peut être dépourvu de joint.

Selon un autre aspect, il est proposé un procédé d'assemblage d'un dispositif de filtration d'air tel que susmentionné (dispositif avec un boîtier apte à être disposé verticalement), le procédé comprenant les étapes consistant essentiellement à :
- délimiter, par un composant/corps de boîtier, un logement accessible par le haut via une ouverture, le composant disposant en outre d'un étrier de fixation incluant un bord de prise situé plus haut que l'ouverture ;
- monter de façon mobile, par une liaison à charnière, un couvercle sur un côté dudit composant, ce côté faisant partie d'une bordure de l'ouverture, ce grâce à quoi le composant et le couvercle constituent le boîtier ;
- disposer des moyens de séparation, comprenant au moins un média perméable à l'air, dans un compartiment intérieur délimité par le composant de boîtier, les moyens de séparation étant réalisés sous forme d'un élément filtrant se montant de façon amovible et en un seul bloc dans ledit compartiment par insertion au travers de l'ouverture, l'élément filtrant permettant de retenir des particules et des poussières du côté opposé à une sortie prévue sur le couvercle ;
- afin de permettre un verrouillage d'une position fermée du couvercle, dans laquelle l'ouverture est recouverte pas une partie d'obturation appartenant au couvercle, rapporter sur le couvercle, par une liaison pivot une partie d'un élément fermoir ayant une portion inférieure d'ancrage s'engageant sous le bord de prise de façon amovible pour maintenir un serrage entre le composant de boîtier et le couvercle avec un écrasement d'un joint périphérique des moyens de séparation entre un épaulement ou gorge du composant et une extrémité inférieure du couvercle, sachant que l'actionnement de l'élément fermoir est permis par une portion supérieure d'actionnement de l'élément fermoir ; et
- configurer la portion supérieure d'actionnement avec une liaison à la portion inférieure d'ancrage, de façon à pouvoir déplacer la portion inférieure d'ancrage par une action exercée sur la portion supérieure d'actionnement, tout en disposant la portion supérieure d'actionnement en saillie vers le haut depuis la liaison pivot dans l'état verrouillé du couvercle, afin que la portion supérieure d'actionnement s'étende plus près d'un sommet du couvercle que de l'ouverture.

La portion supérieure d'actionnement, optionnellement conçue avec une structure filaire, est par exemple disposée avec :
- deux extrémités de la structure filaire recourbées l'une vers l'autre au niveau de la liaison pivot, reçues dans un logement du couvercle le long d'une paroi latérale du couvercle permettant de délimiter une partie bombée du couvercle ; et
- une hanse rigide d'actionnement incluant une portion intermédiaire de la structure filaire et qui est apte à être décalée plus haut et radialement vers l'intérieur par rapport à la liaison pivot.

Selon un autre aspect, il est proposé une utilisation d'un couvercle articulé sur un composant de boîtier pour verrouiller un état fermé d'un boîtier de filtre à air, le couvercle servant à obturer une ouverture supérieure dudit composant par laquelle un élément filtrant peut être monté intérieurement dans le boîtier, le boitier étant disposé verticalement en étant fixé par le bas sur un support prévu dans un véhicule automobile, le couvercle étant reliée au composant de boîtier par une liaison à charnière formant un premier système d'attache, le couvercle ayant une partie d'obturation de l'ouverture avec une face de dessus qui forme la région distale de l'ouverture (région de la partie d'obturation qui est la plus éloignée de l'ouverture), le couvercle étant en outre pourvu de plusieurs moyens de fermeture appartenant à un deuxième système d'attache permettant de verrouiller un état de fermeture du couvercle dans lequel :
- au moins un élément fermoir des moyens de fermeture s'étend entièrement au-dessus d'une jonction entre le couvercle et le composant (14), et
- un serrage couvercle - composant est exercé par une portion inférieure d'ancrage appartenant audit élément fermoir et venant en contact sous un bord de prise, qui par exemple défini au-dessus de l'ouverture, préférentiellement dans une périphérie de l'extrémité supérieure du composant de boîtier ; et
- une portion supérieure d'actionnement, prévue dans chaque élément pour entraîner le déplacement de la portion inférieure d'ancrage, fait saillie vers le haut en s'étendant plus près de la face de dessus du couvercle que de la jonction et/ou radialement vers l'intérieur avec une accessibilité par le dessus du boîtier.

Eventuellement, les moyens de fermeture peuvent être distribués autour d'une sortie du dispositif pour l'évacuation d'air purifié, ladite sortie étant formée latéralement sur le couvercle, ces moyens de fermeture étant actionnables pour autoriser ou déclencher le déverrouillage de l'état de fermeture, la portion supérieure d'actionnement étant optionnellement déplaçable par une poussée exercée par le dessus du couvercle.

Dans une réalisation, il est prévu une utilisation du filtre/dispositif pour filtrer l'air acheminé dans un système de batterie ou de pile à combustible. Dans une autre application, le dispositif sert à filtrer l'air acheminé dans un circuit d'alimentation d'air d'un moteur à combustion interne, en particulier pour moteur de véhicule (automobile par exemple).

Dans des options, le joint (périphérique) prévu sur l'élément filtrant est apte à appliquer, lorsqu'il n'y a plus de serrage exercé par le deuxième système d'attache, une force de séparation à l'élément filtrant pour relever légèrement ce dernier et/ou pour repousser le couvercle vers le haut. Le joint n'étant plus écrasé, un effet de rappel vers la forme nominale du joint (qui est à mémoire de forme) peut permettre un effet d'expansion dans la direction au moins suivant une direction verticale/perpendiculaire à la liaison à charnière et perpendiculaire au plan de l'ouverture du composant de boîtier.

### Brève description des dessins

D'autres caractéristiques, détails et avantages apparaîtront à la lecture de la description détaillée ci-après, et à l'analyse des dessins annexés, sur lesquels :
- la figure 1 est une vue en perspective d'un filtre/dispositif de purification d'air selon un mode de réalisation de l'invention, illustrant un agencement à deux éléments de verrouillage déportés vers le haut par rapport à la jonction du couvercle.
- la figure 2 illustre par une vue de côté un boîtier d'un dispositif selon un autre mode de réalisation conforme à l'invention.
- la figure 3 est une autre vue en perspective du filtre de la figure 1, avec une illustration par pointillés de positions de portions d'actionnement des éléments fermoirs qui permettent un déverrouillage du couvercle.
- la figure 4 est une vue en perspective, avec une coupe longitudinale, illustrant le dispositif de la figure 1 avec un exemple d'élément filtrant monté amovible.
- la figure 5 est une vue de dessus d'un dispositif identique ou similaire à celui de la figure 1, monté dans un environnement encombré avec des portions d'actionnement accessibles pour déverrouiller un deuxième système d'attache du couvercle qui complète la liaison à charnière.

### Description de modes de réalisation

Ci-après un exposé détaillé de plusieurs modes de réalisation de l'invention assorti d'exemples et de référence aux dessins. Sur les différentes figures, des références identiques indiquent des éléments identiques ou similaires.

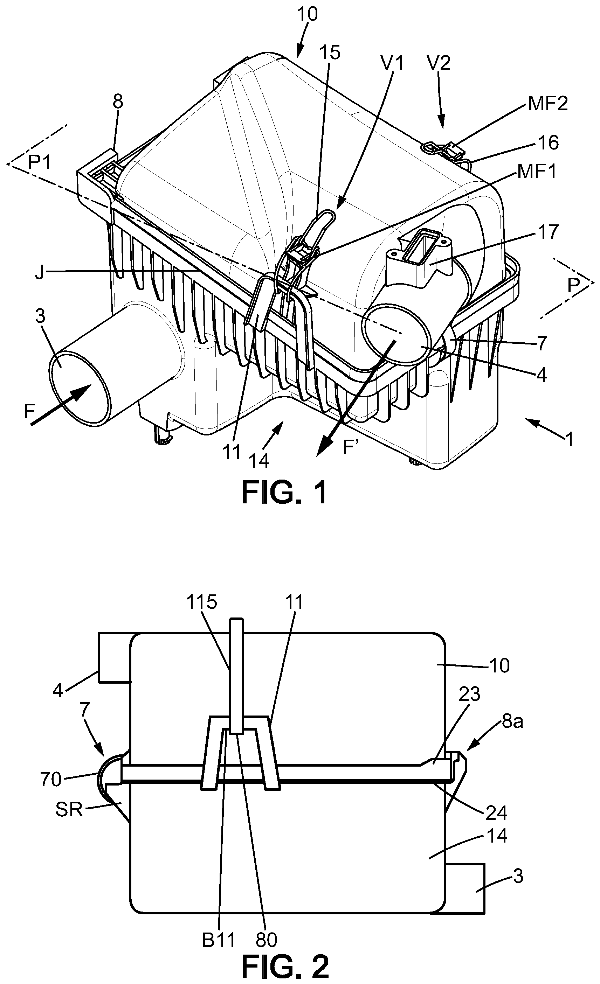

En référence aux figures 1, 2 et 5, il est illustré un dispositif de filtration 1 prévu pour la purification d'un flux d'air F brut (éventuellement préfiltré) provenant de l'extérieur, ce dispositif/filtre étant dans la ligne d'aspiration d'un moteur à combustion interne ou d'un composant de moteur, par exemple un accumulateur ou une source d'énergie nécessitant un refroidissement (source typiquement embarquée dans un véhicule - une pile à combustible par exemple). Ce dispositif 1 peut être placé dans une ligne ou circuit d'admission d'air pour un moteur à combustion interne. Dans le cas d'un véhicule automobile, le dispositif 1 peut être disposé dans la ligne, en tant que dernier filtre avant un collecteur d'admission d'un moteur, entrée similaire de réception d'air purifié d'un moteur ou boîtier d'un générateur électrochimique.

Le dispositif 1 comprend un boîtier 2 pourvu d'une entrée 3 et d'une sortie 4. Le volume intérieur du boîtier 2 inclut une chambre de filtration. La partie filtrante du dispositif 1, logée dans le volume intérieur V, peut comporter ou consister en des moyens de séparation 5, 6 permettant de séparer une zone d'amont Z1, prévue dans la chambre de filtration et communiquant avec l'entrée 3, d'une zone d'aval Z2 communiquant avec la sortie 4. Un flux d'air purifié F' ressort par une face de sortie F2 des moyens de séparation 5, 6 en traversant la zone d'aval Z2 et en rejoignant la sortie 4.
La chambre de filtration est entourée par une paroi latérale du boîtier 2, qui est une paroi de forme générale tubulaire. Le composant de boîtier 14 formant le fond 2a du boitier 2 forme au moins en partie cette paroi latérale. Le composant de boîtier 14 peut présenter deux flancs, une face avant et une face arrière opposée à la face avant. Une large ouverture O2 est formée à l'extrémité supérieure du composant de boîtier 14, cette ouverture O2 étant délimitée par une bordure annulaire B2 qui peut inclure une bride 24 ou rebord saillant extérieur analogue.

Le dispositif de filtration d'air 1 inclut typiquement un boîtier 2, fermé lors du fonctionnement, qui s'ouvre par un couvercle 10 articulé via une liaison à charnière 8 sur le composant de boîtier 14. La liaison à charnière 8 peut correspondre à un premier système d'attache du boîtier 2. Un deuxième système d'attache est prévu en outre pour permettre le verrouillage du couvercle 10 avec un serrage de ce couvercle 10 pour le maintenir fermé contre une bordure B2 formée à l'extrémité supérieure du composant de boîtier 14. Le déverrouillage du couvercle 10 peut être permis par au moins un élément fermoir V1, V2 et éventuellement un ou plusieurs clip(s) additionnel(s) 7.

A l'extrémité supérieure du composant 14, la bordure B2 peut inclure deux côté 21, 22 parallèles (éventuellement rectilignes), distincts d'un côté 20 intégré dans la liaison à charnière 8. Sur ces deux côtés 21, 22, deux montants, étriers ou parties saillantes similaires forment un bord de prise B11 pour coopérer avec une partie d'accrochage complémentaire solidaire du couvercle 10, dans une région située plus haut que la bride 23 du couvercle qui vient en contact avec la bordure B2.

Comme visible par exemple sur la figure 1 ou sur la figure 2, un ou deux éléments de verrouillage formant des fermoirs V1, V2 peuvent être prévus avec chacun une portion inférieure d'ancrage 80 et une portion supérieure d'actionnement 15, 16 reliées entre elles pour former une partie de l'élément fermoir V1, V2 porté par le couvercle 10. La structure de support MF1, MF2 de l'élément fermoir V1, V2 peut être formée latéralement sur le couvercle 10 qui est bombé, au moins dans la zone où se situe une telle structure de support. La portion, supérieure d'actionnement est par exemple du type à bascule (loquet à bascule) pour tirer la portion d'ancrage suivant une direction ascendante lors d'une action de verrouillage.

Afin de faciliter un déverrouillage qui se réalise par le dessus du dispositif de filtration 1, le couvercle 10 peut porter chaque portion supérieure d'actionnement 15, 16 dans une zone bombée et/ou dans une zone proche d'un sommet du couvercle. La portion inférieure d'ancrage 80 peut être entraînée par la portion supérieure d'actionnement conçue comme une pièce séparée, par exemple grâce à une liaison d'articulation située sur le haut de la portion inférieure d'ancrage 80 et éventuellement au-dessus d'une liaison pivot LP permettant de relier la portion supérieure d'actionnement au couvercle 10.
Plus généralement, la portion supérieure d'actionnement 15, 16 ou clip comparable 115 peut être mobile, avec par exemple un effet levier et/ou un effet de poussée, pour entraîner la portion inférieure d'ancrage 80 de manière à engager cette dernière sous un bord de prise B11 prévu dans le composant 14 en réponse à une action telle qu'un appui (par un doigt de l'opérateur, typiquement). L'actionnement peut être du type sans outil pour permettre de déverrouiller et lever le couvercle 10 articulé par rapport au reste du composant de boîtier 14 qui forme la partie fixe du boîtier, au moins lors d'une opération de rechange portant sur tout ou partie des moyens de séparation 5, 6.

Deux fixations respectives peuvent être permises en prévoyant deux bords de prise B11 distribués sur des étriers 11 ou organes saillant similaires du composant 14. Deux parties réceptrices MF1, MF2, opposées l'une à l'autre dans le couvercle 10, peuvent servir à loger et retenir l'une et l'autre des portions inférieures d'ancrage 80 d'un premier élément de verrouillage V1 et d'un deuxième élément de verrouillage V2.
Indépendamment du nombre d'élément(s) ou du secteur angulaire choisi pour l'élément de verrouillage V1, V2 incluant un clip distal 15, 16, 115 (distal de la jonction J), il peut être prévu que la partie réceptrice MF1, MF2 d'un tel clip distal 15, 16, 115 se situe éloigné de l'ouverture O2, avec une distance d'espacement de plus des deux tiers de la hauteur totale (qui est une hauteur maximale) du couvercle 10. Donc, la fixation de la partie portée par le couvercle 10 est surélevée et particulièrement éloignée de la jonction J.

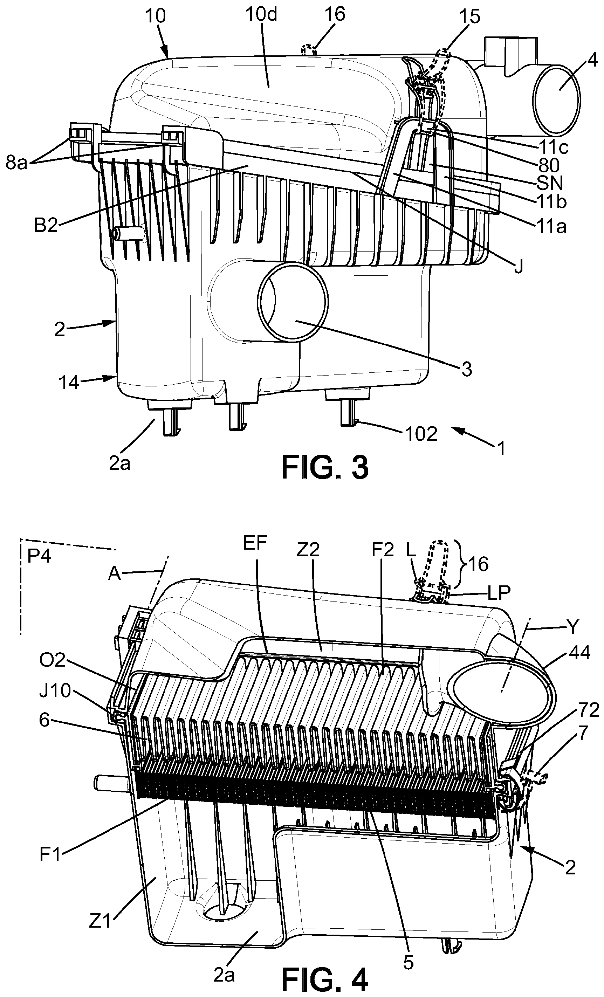

La portion supérieure d'actionnement 15, 16, montée pivotante sur le couvercle 10, peut faire saillie vers le haut en s'étendant de manière ascendante, dans la configuration fermée et verrouillée du boîtier 2. En vue de dessus du couvercle 10, cette portion supérieure d'actionnement 15, 16 s'étend par exemple radialement vers l'intérieur, le cas échéant en ayant une portion préhensible, sous forme de hanse rigide ou de patte, et peut se repousser radialement vers l'extérieur afin de permettre le déverrouillage du couvercle 10. Dans le cas non limitatif des figures 1 et 3, deux portions supérieures d'actionnement 15, 16 sont accessibles par le dessus du couvercle 10, sans nécessité pour les doigts de l'opérateur d'aller sur un côté du boîtier 2 à proximité de la jonction J entre le composant 14 et le couvercle 10. Une telle portion supérieure d'actionnement 15, 16 s'étend plus près de la face de dessus (ou sommet) du couvercle 10 que de la jonction J avec le composant 14. On peut par exemple prévoir que chaque portion supérieure d'actionnement 15,16 fasse saillie verticalement plus haut/ au-dessus du couvercle 10.

### Exemple d'élément de filtration

Le dispositif 1 peut présenter des moyens de séparation 5, 6, perméables et compacts, éventuellement sous forme d'un bloc filtrant à plusieurs couches superposées. Un préfiltre optionnel ou premier média 5 est par exemple prévu et un composant filtrant ou deuxième média 6 est aussi disposé dans la chambre de filtration délimitée par le boîtier 2 du dispositif 1. Ce composant filtrant 6 peut séparer des particules plus fines que la séparation permise par le préfiltre 5, en séparant notamment des particules de taille submillimétrique et/ou submicrométrique. Plus largement, le dispositif 1 formant filtre à air peut présenter une ou plusieurs couches de filtration. Les couches de filtration peuvent être superposées où s'étendre parallèlement l'une à l'autre. Une des couches est de type cellulosique. Additionnellement ou en alternative, une couche peut inclure un matériau d'adsorption, du carbone éventuellement, par exemple sous forme de charbon actif.

Une zone avec un joint annulaire J10 peut délimiter une périphérie de la partie filtrante incluant ces couches. La partie filtrante correspond par exemple à un élément filtrant EF inséré fonctionnellement comme une cartouche, grâce à une fixation amovible. Le joint J10 est à base d'un élastomère, par exemple EPDM. Il peut présenter une section en U, venant enserrer un rebord radialement saillant s'étendant sur la circonférence d'un cadre de l'élément filtrant EF.

La fixation amovible de l'élément filtrant EF peut être réalisé sur un cadre ou un rebord annulaire formé dans le composant de boîtier 14. Le joint J10 peut être en contact étanche sur une circonférence intérieure du composant de boîtier 14, par exemple en venant appuyer par le dessus sur une zone de siège de même forme générale (par exemple rectangulaire) et même dimensions que le joint J10 (voir par exemple le cas non limitatif de la figure 4). L'élément filtrant EF est monté amovible en s'étendant optionnellement sous la sortie 4 appartenant au couvercle 10.
La distance de la face d'entrée F1 de l'élément filtrant EF par rapport au fond 2a peut être supérieure ou égale à la hauteur de l'entrée 3. Il peut être ménagé une zone de collecte/décantation de l'eau séparée par cet élément filtrant EF. L'écartement vertical important par rapport au fond 2a permet de disposer d'une réserve d'air à l'intérieur du composant de boîtier 14, directement sous l'élément filtrant EF.

L'élément filtrant EF peut avoir un format de panneau filtrant, avec un cadre de délimitation par l'extérieur. Ce cadre peut être disposé horizontalement, avec un joint J10 qui peut éventuellement être horizontal ou qui peut être penché avec une inclinaison montante en directe de la liaison à charnière 8. L'axe A défini par les composants de charnière 8a de la liaison 8 peut être sensiblement horizontal à l'état monté.
Le boîtier 2 peut être monté à la verticale ou globalement verticalement dans un véhicule, en présentant une extrémité inférieure (formant le fond 2a) parallèle à l'extension de l'élément filtrant EF. De préférence, le boîtier 2 dispose d'une entrée 3 et d'une sortie 4 qui sont chacune éloignées du fond 2a délimitant un dessous de la chambre de filtration.

Une des couches (au moins) de l'élément filtrant EF permet de retenir des liquides aqueux, chaque couche étant perméable à l'air. L'élément filtrant EF permet de délimiter une zone propre, correspondant à zone d'aval Z2 qui s'étend notamment dans un creux du couvercle 10. La face F2 peut former une face supérieure de l'élément filtrant EF, agencée/disposée plus bas que le bord de prise B11 (dans les conditions de fonctionnement du dispositif 1). A l'opposé de la deuxième face F2, la première face est typiquement disposée en regard du fond 2a et peut faire partie d'un préfiltre ou d'une première couche de l'élément filtrant qui s'étend sélectivement sous le niveau/plan de la jonction J (et ainsi sous un plan de l'ouverture O2).

Eventuellement, l'élément filtrant EF qui inclut un cadre de support dispose d'un premier média filtrant 5 et d'un deuxième média filtrant 6. Comme dans l'exemple de la figure 4, ces médias peuvent être répartis de part et d'autre du cadre de support qui est lié de façon étanche à la fois :
- au premier média 5, via une première couche annulaire de fixation, située à l'opposé de la première face F1 qui appartient au premier média filtrant 5 ; et
- au deuxième média 6, via une deuxième couche annulaire de fixation, située à l'opposé de la deuxième face F2 qui appartient au deuxième média filtrant 6.
Le cadre peut supporter le joint J10 sur l'extérieur de sa paroi latérale qui est par exemple à section rectangulaire ou polygonale. La paroi latérale du cadre inclut au moins quatre côtés et un rebord interne annulaire formant un support par le dessous du deuxième média filtrant 6 qui s'étend (optionnellement seulement en partie) dans un creux du couvercle 10.

En référence à présent à la figure 3, le composant de boîtier 14, réalisé en une pièce ou résultant d'un assemblage de différentes pièces, peut être sensiblement aussi large que profond (avec une dimension largeur mesurée suivant la direction de l'axe A des organes/membres d'articulation 8a de la liaison à charnière 8. Il peut même être plus profond que large du côté de la liaison à charnière 8. Le flux F peut circuler d'abord suivant une direction tangentielle ou parallèle à un plan de la face d'entrée F1 de l'élément filtrant et/ou à un plan de l'ouverture O2 (ouverture supérieure) du composant de boîtier 14, comme visible sur la figure 1.

Sur la figure 1, on a représenté un boîtier 2 disposant d'une entrée 3 et d'une sortie 4 orientées du même côté, avec l'entrée proche d'un côté où se situe la liaison à charnière 8, et la sortie 4 prévu sur le couvercle 10 en se raccordant sur le couvercle 10 de façon coudée sur une face de couvercle opposée à la liaison à charnière 8. Cette disposition peut permettre d'optimiser l'intégration du boîtier 2 dans un environnement encombré. En variante, d'autres orientations peuvent être utilisées pour l'entrée 3 et/ou la sortie 4.

### Exemple de structure du couvercle

L'ouverture O2 du composant de boîtier 14 peut constituer l'unique accès par lequel l'élément filtrant EF est monté dans le composant de boîtier 14. Le couvercle 10 peut présenter une forme bombée au moins dans une région de la partie d'obturation P10 qui vient recouvrir l'ouverture O2. L'articulation du couvercle 10 est réalisée sélectivement sur un côté du composant 14, par exemple un côté sensiblement rectiligne, qui permet de border l'ouverture O2. Dans l'exemple non limitatif de la figure 1, le couvercle 10 est bombé au moins à l'opposé de la liaison à charnière 8. Une dépression 10d, bien visible dans le cas de la figure 3, permet de limiter localement l'encombrement du couvercle 10. Cette dépression 10d est adjacente à la liaison à charnière 8 et adjacente à une portion de bord située à l'aplomb d'un embout formant l'entrée 3 du composant de boîtier. Plus largement, couvercle 10 peut être conçu avec un amincissement ou une dépression 10d agencée au moins du côté de l'entrée 3 et dans un secteur angulaire qui peut être distinct des secteurs angulaires où sont distribués les éléments du deuxième système d'attache.
Ce type d'agencement permet d'intégrer des composants externes, des tubes et/ou des tubulures dans une zone à la fois proche de la liaison charnière 8 et l'entrée 3, ce qui peut ensuite laisser de la place pour le côté opposé du couvercle 10, qui requiert un certain débattement afin que le couvercle 10 soit suffisamment levé (sans interférence avec d'autres composants), pour découvrir l'ouverture O2 lorsqu'il faut changer d'élément filtrant EF.

Dans les exemples illustrés, la sortie 4 présente une certaine mobilité en raison de ce son intégration sur le couvercle 10, à distance de la liaison à charnière 8. Il peut être prévu, du côté opposé à la liaison 8 formant le premier système d'attache, au moins un clip 7 qui appartient au deuxième système d'attache. Le deuxième système d'attache permet une fixation manuelle, sans outil dans des options préférées. Le couvercle 10 inclut un rebord pour la fixation du clip 7, de préférence avec une délimitation entre deux bords de guidage.
La sortie 4 pour l'air purifié peut être décalée verticalement (plus haut) par rapport à la jonction J, ce qui permet de localiser le clip 7 sous l'ouverture constituant la sortie 4 avec une accessibilité à ce clip 7 pouvant être permise du fait de l'espacement extérieur disponible prévu pour le débattement du couvercle 10 articulé.

Comme visible avec le cas non limitatif des figures 1, 2 et 4, un clip 7 a par exemple une structure courbée avec un effet de rappel élastique vers une conformation semi-circulaire ou analogue, qui peut correspondre à la conformation illustrée en pointillés sur la figure 4. Un tel clip est optionnellement réalisé en une seule pièce métallique. Le composant de boîtier 14 inclut un siège de retenue SR pour retenir une extrémité basse du clip 7, qui inclut ici une lame 70 semi-circulaire à effet ressort. Le clip 7 peut être porté par le composant de boîtier 14 dans un état déconnecté du couvercle 10.

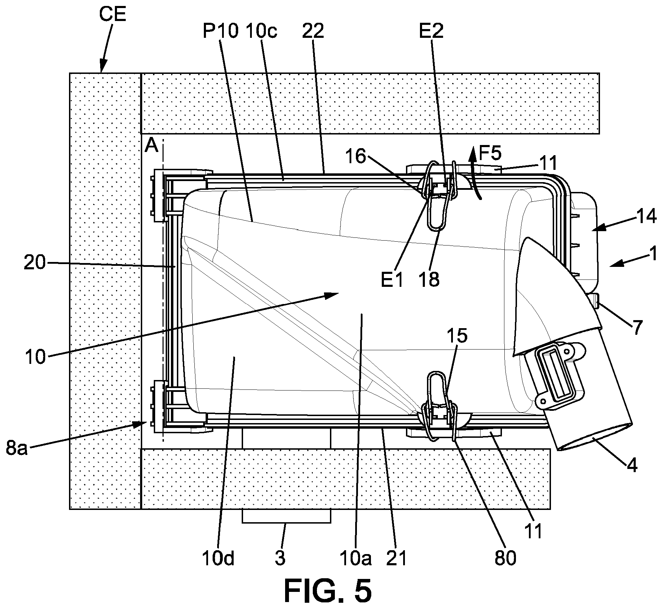

Dans le secteur angulaire du couvercle 10 (comme observé en vue de dessus ; voir aussi la figure 5) qui correspond à la localisation de la sortie 4, ici un secteur angulaire associé au côté opposé à la liaison 8, on prévoit sur le couvercle 10 une région d'attache, par exemple sous la forme d'un rebord pour l'engagement avec une retenue amovible d'une partie radialement intérieure du clip 7. Comme le clip 7 dispose d'une patte de manipulation/préhension, pouvant former l'extrémité supérieure du clip 7, un utilisateur peut déplacer le haut du clip 7 jusqu'à obtenir l'engagement sur le rebord. Un tel rebord peut se situer en outre dans une encoche d'un retour annuaire prévu dans une bride 23 du couvercle 10 (une gorge supérieure étant alors délimitée par le couvercle entre sa paroi latérale et ce retour ascendant). Dans ce cas, la patte de manipulation peut avoir une extension radiale pour chevaucher le rebord en étant en saillie radialement vers l'extérieur du couvercle 10. Les deux bords de délimitation de l'encoche peuvent guider l'abaissement d'une partie recourbée du clip 7 en évitant des mouvements indésirables de torsion lors de la mise en place du clip dans sa position de prise pour retenir le couvercle 10. Une telle partie recourbée, formant une boucle ouverte, pour partie analogue, peut disposer d'une extrémité libre en saillie radialement vers l'extérieur, apte à constituer une patte de préhension 72.

Dans ces options de réalisation du couvercle 10, l'opérateur doit descendre actionner le clip à proximité de la jonction J. Pour éviter d'avoir un espace seulement dédié à l'accès au clip 4, sur un côté du couvercle 10, ce clip 7 est situé dans le même secteur angulaire que la sortie 4 (également prévue sur le couvercle 10) qui nécessite déjà un espace libre (pour le débattement au moment de lever le couvercle 10). Sur le cas non limitatif illustré aux figures 1 et 5, la sortie 4 est coudée en formant une portion arrière 44 du coude. L'axe Y dans le débouche de la sortie 4 peut être angulairement décalé à plus de 60°; par exemple environ 90°, par rapport au plan médian vertical P4 séparant en deux moitiés la face du couvercle où est formée cette sortie 4. Le clip 7 présente par exemple une patte de contrôle/préhension 72 visible par le dessus et accessible en longeant/passant par derrière la portion arrière 44 du coude de la sortie 4. Plus largement, on peut prévoir une colocalisation de la partie de préhension du clip 7 et de la sortie 4, sur un même côté du couvercle opposé à /distal du premier système d'attache, tout disposant d'un léger décalage pour l'accès au clip 7, au moins pour rendre celui-ci visible dans une vue de dessus du dispositif à l'état fermé du couvercle 10.

Il peut être prévu, dans une phase de fermeture du couvercle 10, d'attacher d'abord fixement le clip 7, juste après avoir abaissé le couvercle 10 pour former la jonction annulaire J. Après cette première fixation amovible, l'opérateur peut manipuler un ou deux éléments fermoirs V1, V2 pour s'assurer d'un serrage du couvercle 10 aussi sur deux côtés parallèles du composant de boîtier 10 qui s'étendent transversalement par rapport à la liaison à charnière 8. Sur le couvercle 10, on peut prévoir aussi deux côté parallèles (éventuellement rectilignes), distincts d'un côté 20 intégré dans la liaison à charnière 8. Sur ces deux côtés et au-dessus de la bride 23 du couvercle 10, la surface peut se courber de manière convexe pour rejoindre un sommet de couvercle correspondant à la face de dessus 10a.

### Exemples non limitatifs de structure d'un élément fermoir

En référence notamment aux figures 1 et 3-4, le couvercle 10 est maintenu fermé avec la jonction J qui peut s'étendre suivant un plan P, lorsque chaque élément fermoir V1, V2 est à l'état verrouillé. L'élément fermoir V1, V2 présente une portion supérieure d'actionnement 15, 16 qui est rapportée sur le couvercle 10. Dans la configuration fermée du couvercle 10, cette portion supérieure 15, 16 se situe sur une région de support située non seulement au-dessus du plan P (plan pouvant être incliné/non parallèle au fond 2a) mais aussi au-dessus d'un plan P1 passant par la liaison à charnière 8 et coupant un axe central de la sortie 4. La portion supérieure 15, 16 est conçue et agencée de façon à pouvoir s'étendre vers le haut depuis une extrémité de liaison en rotation avec la région de support. Optionnellement, cette portion supérieure 15, 16 est une portion à cliquet qui peut remonter par le dessus d'une partie d'obturation P10 du couvercle 10.

Dans l'exemple illustré, la partie de l'élément fermoir V1, V2 portée par le couvercle 10 comprend la portion inférieure d'ancrage 80 et la portion supérieure d'actionnement 15, 16 qui ont chacune une structure filaire, par exemple métallique. Cette partie peut consister en deux pièces filaires : l'une formant la portion inférieure d'ancrage 80, l'autre formant la portion supérieure d'actionnement 15, 16. Ces deux portions peuvent correspondre à deux pièces liées l'une à l'autre. Eventuellement, seule la portion supérieure d'actionnement 15, 16 est en liaison pivot (une liaison LP de ce type est visible notamment sur la figure 4) directement avec la pièce constitutive de la partie d'obturation P10 du couvercle 10. La portion inférieure d'ancrage 80 peut être engagée/enfilée dans deux boucles de la portion supérieure d'actionnement 15, 16 servant à fixer/réaliser la liaison L avec la portion d'ancrage 80 et qui permettent de définir un axe d'articulation secondaire, par exemple au-dessus de la liaison pivot LP. Le bas de la portion inférieure d'ancrage 80 peut être en forme de crochet, par exemple courbé avec une région de rebroussement.

Dans des réalisations facilitant le montage sur une paroi latérale du couvercle 10, la portion supérieure d'actionnement 15, 16 présente deux extrémités E1, E2 recourbées l'une vers l'autre qui sont reçues dans un logement prévu à l'extrémité de fixation supérieure d'un support nervuré SN. Un tel support SN peut être formé comme un relief radialement saillant sur la paroi latérale du couvercle.
Le support SN peut inclure au moins une nervure du couvercle 10 qui s'étend vers le bas, depuis l'extrémité de fixation supérieure, en direction d'une bride 23 du couvercle 10.

Eventuellement, la portion supérieure 15, 16 est préalablement attachée par la liaison L à la portion inférieure d'ancrage 80, avant d'être emboîtée élastiquement dans le logement du couvercle 10. Un clippage est par exemple réalisé pour engager la portion supérieure d'actionnement 15, 16 dans un tel logement, par exemple formé par deux gorges de réception qui font partie d'un même support nervuré SN ou relief similaire. L'accès à ces gorges peut être permis en surmontant une pente de guidage pour chacune des extrémités E1, E2. Frontalement sur le relief, dans une zone séparant les deux gorges, on peut prévoir un guide agencé en pointe pour guider et légèrement écarter (par flexion élastique) des bouts, ergots ou extrémités E1, E2 formées en bas de la portion supérieure d'actionnement 15, 16, jusqu'à ce qu'elles pénètrent dans les gorges avec un effet anti-retour permis par un décrochage à l'arrière du guide agencé en pointe.

Quel le soit le mode de fixation précisément adopté pour l'élément fermoir V1, V2, la fixation au couvercle 10 est réalisée très au-dessus de la jonction J, par exemple en utilisant des extensions du composant 14 qui viennent former le bord de prise B11 dans une zone en chevauchement par l'extérieur. En référence aux figures 1 à 3, il est prévu au moins un étrier de fixation 11 qui forme une telle extension du composant de boîtier 14, avec typiquement deux jambes 11a, 11b qui se raccordent à la périphérie de ce composant 14, par exemple en étant soudées ou directement formées par moulage sur une bride 24 entourant l'ouverture O2. Ce type de disposition permet de multiplier les points de traction/contact de serrage sur le composant 14, avec par exemple quatre jambes 11a, 11b lorsque deux étriers 11 sont utilisés pour l'action de serrage lors du verrouillage par les éléments fermoirs V1, V2.

Sur la figure 1, ailleurs que dans la zone formant dépression 10d et dans une région suffisamment proche du bord de jonction opposé à la liaison à charnière 8 (bord chevauché ici par le clip 7), le boîtier 2 est pourvu de deux étriers de fixation 11, rigides et à forme de U inversé, solidaires chacun du composant de boîtier 14. La hauteur de ces étriers 11 est telle que le bord de prise B11 défini par le tronçon/portion de retenue 11c entre les deux jambes 11a, 11b s'étend plus haut que les composants de charnière 8a malgré une réduction de hauteur progressive du composant 14 en s'éloignant de la liaison à charnière 8.

Plus largement, il est prévu deux étriers de fixation 11 distribués sur la périphérie du composant de boîtier 14 et permettant de rehausser la zone de contact avec la partie inférieure d'ancrage 80 prévue sur un élément fermoir V1, V2 correspondant. La zone de contact ainsi rehaussée peut correspondre à un bord de prise B11 formé perpendiculairement à l'axe A de la liaison 8. Ce bord de prise B11 peut être généralement parallèle à un plan de l'ouverture O2 ou à un plan de la jonction J. Eventuellement, les éléments fermoirs V1, V2 peuvent être identiques, ce qui simplifie l'assemblage.

Dans des options de réalisation, il peut être réalisé un ou plusieurs clips disposés sur le couvercle 10 de façon espacée par rapport à une bride du couvercle 23, en étant verticalement séparés de cette bride 23 par une région de transition, optionnellement nervurée. Chacun de ces éléments portés dans une partie bombée du couvercle 10 est un clip distal de la jonction J, par opposition au clip 7 en chevauchement sur la jonction J.

Chaque clip distal 15, 16, 115 est conçu en tant que partie mobile d'un élément fermoir V1, V2 portée par le couvercle 10. L'actionnement se fait dans une région se situant entièrement au-dessus du couvercle 10 ou dépassant un sommet du couvercle 10. En référence à la figure 2, on peut prévoir un clip distal 115 allongé suivant la direction verticale pour être actionné à une hauteur qui est très différente de la hauteur d'accessibilité du clip 7. Eventuellement, le clip distal 115 peut faire partie d'une structure d'actionnement commune à deux étriers de fixation 11 ou à deux parties saillantes similaires du composant 14 qui permettent de définir un bord de prise B11 de part et d'autre du couvercle, typiquement sur des côtés perpendiculaires à l'axe A de la liaison à charnière 8. Dans ce cas, on peut éventuellement prévoir une branche de liaison venant s'étendre au-dessus du couvercle unique en connectant deux clips, optionnellement formés dans la même pièce avec la branche de liaison.

Plus largement, une structure d'actionnement intégrant deux clips éloignés de la jonction J peut présenter une forme générale de U inversé ou de H afin de permettre une mise en place de deux clips en un seul mouvement de montage par le dessus du couvercle 10, le cas échéant avec au moins un point d'ancrage au milieu de la portion d'obturation. Pour le déverrouillage des deux clips de la structure d'actionnement, une région à effet de rappel élastique peut être sélectivement déplacée en appuyant ou en tirant sur une portion supérieure d'actionnement apte à entraîner le déplacement de la portion inférieure d'ancrage prévu dans le clip.

Dans les exemples illustrés sur les figures, le deuxième système d'attache comporte un premier élément de verrouillage V1 et un deuxième élément de verrouillage V2 qui sont portés par une portion bombée du couvercle 10 dans une zone plus proche de la sortie 4 que de la liaison à charnière 8, afin d'avoir une accessibilité à ces éléments V1, V2 même si la périphérie du boîtier 2 est encombrée (à l'exception de la zone avec la sortie 4). Il est alors prévu pour chaque élément une extrémité d'actionnement, qui peut être rigide. Elle peut être par exemple conçue avec une structure filaire sous forme de hanse 18. La hanse ou extrémité d'actionnement peut être coudée vers l'intérieur dans la portion supérieure d'actionnement 15, 16.

Bien qu'il soit montré deux éléments de verrouillage V1, V2 disposés sur deux faces convexes réparties de part et d'autre d'un plan vertical médian (plan médian du couvercle 10 passant par le milieu de la liaison à charnière 8), on peut aussi prévoir d'autres dispositions avec une géométrie modifiée pour le couvercle 10 et/ou un agencement de verrouillage différent. Par exemple, on peut prévoir une disposition non symétrique des éléments V1, V2 par rapport à un tel plan médian P4, optionnellement avec un seul élément à cliquet ayant une extrémité 18 accessible sur le dessus du couvercle 10. Dans des variantes, une seule extrémité 18 est décalée plus haut et s'étend radialement vers l'intérieur par rapport à la liaison pivot LP du clip distal/portion supérieure d'actionnement 15, 16, 115.

### Exemples non limitatifs de paramètres géométriques/dimensionnels

L'entrée 3 peut présenter une disposition intermédiaire en hauteur dans le composant de boîtier 14 logeant les moyens de séparation 5, 6. Le ou les étriers 11, en forme de U inversé, présentent chacun une portion de retenue 11c qui se situe plus haut que les membres 8a de la liaison 8 à charnière et, plus généralement, plus haut que l'axe A d'articulation du couvercle 10. Chaque étrier 11 peut présenter une extension verticale plus grande que la longueur de la portion supérieure d'actionnement 15, 16. Ainsi la partie réceptrice MF1, MF2 est à un niveau de hauteur plus proche (verticalement) d'un sommet de couvercle appartenant à la partie d'obturation P10 qu'elle ne l'est de la jonction J.

Le ou les éléments de verrouillage V1, V2 forment des clips portés par le couvercle 10 et la portion inférieure d'ancrage 80 a une forme de crochet. Sur un côté opposé à la liaison à charnière 5 et/ou au niveau des éléments de verrouillage V1, V2, la distance minimale (mesurée verticalement) entre la jonction J et le dessus du couvercle 10 peut optionnellement être supérieure à 40 mm et/ou représente plus du quart d'une hauteur totale maximale du boîtier 2, de préférence plus du tiers de la hauteur totale maximale du boîtier 2.

La jonction J peut s'étendre dans un plan incliné par rapport à un plan du fond 2a du boîtier 2, par exemple avec un angle d'inclinaison supérieur à 5 ou 10° et inférieur ou égal à 30 ou 35°. Un joint J10 peut suivre l'inclinaison de cette jonction. Le bas ou extrémité inférieure du couvercle 10 peut être dimensionné comme une bride qui vient s'insérer dans le volume intérieur du composant 14 afin d'écraser le joint J10. Ainsi, lors du verrouillage d'une position fermée du couvercle 10, la portion inférieure d'ancrage 80 s'engage sous le bord de prise B11 avec un effet de serrage qui accentue l'insertion de l'extrémité inférieure du couvercle 10 dans une région périphérique haute du volume intérieur du composant 14, ce qui permet d'écraser le joint J10 périphérique des moyens de séparation 5, 6. Ce joint J10 peut être en siège sur un épaulement ou dans une gorge du composant 14.

### Assemblage du dispositif de filtration

Le composant de boîtier 2 avec le couvercle associé 10 peut se fixer par le bas sur une région de montage prévue dans un véhicule, avant l'installation d'un ou plusieurs autres composants CE externes au dispositif 1. En référence à la figure 3, des pattes 102 de fixation peuvent s'étendre en saillie vers le bas depuis la paroi inférieure formant le fond 2a pour permettre un montage par le dessus. Le couvercle 10 articulé, basculé en configuration ouverte, découvre l'ouverture O2 qui est alors accessible par le haut, du côté opposé au fond 2a. L'élément filtrant EF peut alors être suspendu dans le composant de boîtier 14 en reposant, par le joint J10, sur un épaulement intérieur formé par la paroi latérale du composant 14, à proximité de l'ouverture O2. Ceci permet de ménager un vaste espace d'air sous l'élément filtrant EF constituant les moyens 5, 6 de séparation.

L'articulation du couvercle 10 permet de limiter le nombre de clips ou éléments de verrouillage V1, V2, 7, par exemple en ne dépassant pas trois clips tout en ayant une bonne efficacité de serrage. Le recours à des étriers 11 contribue à bien distribuer la force de serrage tout en ayant un nombre limité d'actions de verrouillage. Après avoir installé l'élément filtrant EF et refermé le couvercle 10, il ne reste pour l'opérateur qu'à repousser un clip 7 proximal de la jonction J et repousser P un ou deux clips/éléments à cliquet permettant la prise sous le ou les bords de prise B11.

Pour le déverrouillage ultérieur, la préhension des extrémités 18 est facilitée par leur position haut et décalée vers l'intérieur, même dans un cas encombré comme illustré par exemple sur la figure 5, avec un accès direct impossible sur les côtés du boîtier 2, à l'exception du côté de la sortie 4. La flèche F5, sur la figure 5, illustre une action simple de déverrouillage ne nécessitant pas de longer le bas ou le flanc du couvercle 10.
Le col formant la sortie 4 peut aussi porter, par une douille 17, un capteur de flux d'air tel qu'un débitmètre massique d'air (appelé MAF).

Il doit être évident pour les personnes versées dans l'art que la présente invention permet des modes de réalisation sous de nombreuses autres formes spécifiques sans l'éloigner du domaine d'application de l'invention comme revendiqué.
Ainsi, il est aussi permis de former le couvercle 10 avec un périmètre présentant des parties courbées ou avec un format rond en vue de dessus, ou encore de disposer la sortie 4 différemment, par exemple dans un angle du couvercle lorsque celui-ci présente un format à quatre faces latérales.

## Revendications

1. Dispositif (1) de filtration d'air pour véhicule motorisé, le dispositif incluant une entrée (3) pour l'admission d'un flux d'air brut et une sortie (4) pour l'évacuation d'air purifié, le dispositif comprenant :
- un élément filtrant (EF) ;
- un composant de boîtier (14) présentant une paroi inférieure formant un fond (2a), une paroi latérale (2b), ladite entrée (3) et une extrémité supérieure avec une ouverture (O2) délimitée par une bordure (B2) annulaire, l'ouverture (O2) étant opposée au fond (2a) et permettant à l'élément filtrant (EF) d'être inséré dans le composant de boîtier (14) ;
- un couvercle (10) permettant d'obturer l'ouverture (O2) en formant une jonction (J) avec la bordure (B2), le couvercle (10) étant relié au composant de boîtier (14) par une liaison à charnière (8) formant un premier système d'attache, le couvercle ayant une partie (P10) d'obturation de l'ouverture avec une face de dessus (10a) qui forme la région de la partie d'obturation (P10) qui est la plus éloignée de l'ouverture (O2) ; et
- un deuxième système d'attache pourvu d'un élément fermoir (V1) dont une partie est portée par le couvercle (10) en étant apte à coopérer avec le composant de boîtier (14) dans une configuration de verrouillage dans laquelle la partie portée par le couvercle est engagée par le dessous contre un bord de prise (B11) prévu dans le composant de boîtier (14) ; l'élément fermoir (V1) s'étend entièrement au-dessus de la jonction (J) en étant apte à exercer, dans la configuration de verrouillage, une action de serrage entre le composant de boîtier (14) et le couvercle (10), l'élément fermoir incluant :
- une portion inférieure d'ancrage (80) pour le contact avec le bord de prise (B11) ; et
- une portion supérieure d'actionnement (15) adaptée pour déplacer, de préférence en la faisant pivoter, la portion inférieure d'ancrage (80), et **caractérisé**
**en ce que** la portion supérieure d'actionnement (15) fait saillie vers le haut en s'étendant, dans la configuration de verrouillage, plus près de la face de dessus du couvercle (10) que de la jonction (J), la portion supérieure d'actionnement (15) faisant saillie au-dessus du couvercle (10) pour être accessible sur le dessus de ce couvercle (10).

2. Dispositif selon la revendication 1, dans lequel la sortie (4) est formée sur le couvercle (10), de préférence à l'opposé de la liaison à charnière (8), la portion supérieure d'actionnement (15) étant une portion à cliquet qui s'étend au-dessus de la sortie (4) et/ou de façon à être en chevauchement par le dessus du couvercle (10), dans la configuration de verrouillage.

3. Dispositif selon la revendication 1 ou 2, dans lequel le couvercle (10) est bombé au moins sur un côté opposé à la liaison à charnière (8) et inclut un moyen de fixation (MF1) sur lequel est montée, pivotante, la portion supérieure d'actionnement (15),
et dans lequel le bord de prise (B11) est formé dans un étrier de fixation (11) qui fait saillie en direction opposée au fond (2a), de sorte que le bord de prise (B11) est décalé verticalement plus haut que la jonction (J).

4. Dispositif selon l'une quelconque des revendications précédentes, dans lequel la portion inférieure d'ancrage (80) et la portion supérieure d'actionnement (15) ont chacune une structure filaire, de préférence métallique,
et dans lequel la portion supérieure d'actionnement (15) présente deux extrémités (E1, E2) recourbées l'une vers l'autre qui sont reçues dans un logement prévu à l'extrémité de fixation supérieure d'un support nervuré (SN) formé comme un relief radialement saillant sur une paroi latérale du couvercle.

5. Dispositif selon la revendication 4 lorsqu'elle dépend de la revendication 3, dans lequel le support nervuré (SN) inclut au moins une nervure du couvercle qui s'étend vers le bas, depuis l'extrémité de fixation supérieure, en direction d'une bride (23) du couvercle (10) qui est chevauchée extérieurement sur sa périphérie par l'étrier de fixation (11).

6. Dispositif selon l'une quelconque des revendications précédentes, dans lequel le couvercle (10) et le composant de boîtier (14) constituent un boîtier de délimitation d'une chambre de filtration,
et dans lequel la sortie (4) est :
- disposée sur le couvercle (10), à l'opposé de la liaison à charnière (8) ;
- coudée, en permettant à un flux d'air purifié sortant de l'élément filtrant (EF) de ressortir de la chambre de filtration, en étant dirigé du même côté du boîtier que celui incluant l'entrée (3).

7. Dispositif selon l'une quelconque des revendications précédentes, incluant dans un creux du couvercle une zone (Z2) de la chambre de filtration qui est une zone en aval de l'élément filtrant (EF), communiquant avec la sortie (4) et délimitée entre une face intérieure du couvercle (10) et une face de sortie (F2) de l'élément filtrant (EF),
dans lequel l'élément filtrant (EF), reçu de manière amovible dans le composant de boîtier (14), dispose de moyens (5, 6) de séparation qui sont adaptés pour retenir les particules et les poussières en laissant passer un flux d'air purifié (F') en direction de la sortie (4) et disposés plus bas que le bord de prise (B11) dans la configuration de verrouillage, de sorte que ladite face de sortie (F2) s'étend plus bas que le bord de prise tout en s'étendant dans un creux du couvercle (10).

8. Dispositif selon l'une quelconque des revendications précédentes, dans lequel le deuxième système d'attache comporte l'élément fermoir en tant que premier élément de verrouillage (V1) et comporte un deuxième élément de verrouillage (V2) disposant aussi d'une portion inférieure d'ancrage (80) et d'une portion supérieure d'actionnement à cliquet (16) adaptée pour déplacer, de préférence en la faisant pivoter, la partie inférieure d'ancrage (80) du deuxième élément de verrouillage (V2),
dans lequel la bordure (B2) présente deux côtés (21, 22), distincts d'un côté (20) pourvu de la liaison à charnière (8), sur lesquels sont distribués deux parties réceptrices, pour l'engagement respectivement avec l'une et l'autre des portions inférieures d'ancrage (80) du premier élément de verrouillage (V1) et du deuxième élément de verrouillage (V2).

9. Procédé d'assemblage d'un dispositif (1) de filtration d'air tel que défini dans l'une quelconque des revendications précédentes et incluant un boîtier (2) apte à être disposé verticalement, le procédé comprenant les étapes consistant essentiellement à :
- délimiter, par un composant de boîtier (14), un logement accessible par le haut via une ouverture (O2), le composant (14) disposant en outre d'un étrier de fixation (11) incluant un bord de prise (B11) situé plus haut que l'ouverture (O2) ;
- monter de façon mobile, par une liaison à charnière (8), un couvercle (10) sur un côté dudit composant (14), ce côté faisant partie d'une bordure de l'ouverture (O2), ce grâce à quoi le composant (14) et le couvercle (10) constituent le boîtier (2) ;
- disposer des moyens (5, 6) de séparation, comprenant au moins un média perméable à l'air, dans un compartiment intérieur délimité par le composant de boîtier (14), les moyens de séparation (5, 6) étant réalisés sous forme d'un élément filtrant (EF) se montant de façon amovible et en un seul bloc dans ledit compartiment par insertion au travers de l'ouverture (O2), l'élément filtrant (EF) permettant de retenir des particules et des poussières du côté opposé à une sortie (4) prévue sur le couvercle (10) ;
- afin de permettre un verrouillage d'une position fermée du couvercle (10), dans laquelle l'ouverture (O2) est recouverte pas une partie d'obturation (P10) appartenant au couvercle (10), rapporter sur le couvercle (10), par une liaison pivot (LP), une partie d'un élément fermoir (V1, V2) ayant une portion inférieure d'ancrage (80) s'engageant sous le bord de prise (B11) de façon amovible pour maintenir un serrage entre le composant de boîtier (14) et le couvercle (10) avec un écrasement d'un joint (J10) périphérique des moyens de séparation (5, 6) entre un épaulement ou gorge du composant (14) et une extrémité inférieure du couvercle (10), sachant que l'actionnement de l'élément fermoir (V1, V2) est permis par une portion supérieure d'actionnement (15, 16) de l'élément fermoir (V1, V2) ; et
- configurer la portion supérieure d'actionnement (15, 16) avec une liaison à la portion inférieure d'ancrage (80), de façon à pouvoir déplacer la portion inférieure d'ancrage (80) par une action exercée sur la portion supérieure d'actionnement, tout en disposant la portion supérieure d'actionnement (15) en saillie vers le haut depuis la liaison pivot (LP) dans l'état verrouillé du couvercle (10), afin que la portion supérieure d'actionnement (15, 16) s'étende plus près d'un sommet du couvercle (10) que de l'ouverture (O2), cette portion supérieure d'actionnement faisant saillie au-dessus du couvercle (10) pour être accessible sur le dessus de ce couvercle (10) lorsque ce dernier est à l'état verrouillé.

10. Procédé selon la revendication 9, dans lequel la portion supérieure d'actionnement, conçue avec une structure filaire, est disposée avec :
- deux extrémités (E1,E2) de la structure filaire recourbées l'une vers l'autre au niveau de la liaison pivot (LP), reçues dans un logement du couvercle (10) le long d'une paroi latérale du couvercle permettant de délimiter une partie bombée du couvercle ; et
- une hanse rigide d'actionnement (18) incluant une portion intermédiaire de la structure filaire et qui est apte à être décalée plus haut et radialement vers l'intérieur par rapport à la liaison pivot (LP).

11. Utilisation d'un couvercle (10) articulé sur un composant de boîtier (14) pour verrouiller un état fermé d'un boîtier (2) de filtre à air, dans laquelle le couvercle (10) sert à obturer une ouverture (O2) supérieure dudit composant (14) par laquelle un élément filtrant (EF) peut être monté intérieurement dans le boîtier, le boitier (2) étant disposé verticalement en étant fixé par le bas sur un support prévu dans un véhicule automobile, **caractérisée en ce que** le couvercle (10) est reliée au composant de boîtier (14) par une liaison à charnière (8) formant un premier système d'attache, le couvercle ayant une partie (P10) d'obturation de l'ouverture (O2) avec une face de dessus (10a) qui forme la région de la partie d'obturation (P10) qui est la plus éloignée de l'ouverture (O2), le couvercle (10) étant en outre pourvu de plusieurs moyens de fermeture (V1, V2, 7) appartenant à un deuxième système d'attache permettant de verrouiller un état de fermeture du couvercle (10) dans lequel :
- au moins un élément fermoir (V1, V2) des moyens de fermeture s'étend entièrement au-dessus d'une jonction (J) entre le couvercle (10) et le composant (14), et
- un serrage couvercle (10) - composant (14) est exercé par une portion inférieure d'ancrage (80) appartenant audit élément fermoir (V1, V2) et venant en contact sous un bord de prise (B11) défini au-dessus de l'ouverture (O2) dans une périphérie de l'extrémité supérieure du composant de boîtier (14) ; et
- une portion supérieure d'actionnement (15, 16), prévue dans chaque élément fermoir (V1, V2) pour entraîner le déplacement de la portion inférieure d'ancrage, fait saillie vers le haut en s'étendant plus près de la face de dessus (10a) du couvercle (10) que de la jonction (J), la portion supérieure d'actionnement (15) faisant saillie au-dessus du couvercle (10) pour être accessible sur le dessus du boîtier (2).

## Patentansprüche

1. Luftfiltervorrichtung (1) für Kraftfahrzeuge, wobei die Vorrichtung einen Einlass (3) für die Zufuhr eines Rohluftstroms und einen Auslass (4) für die Abführung von gereinigter Luft umfasst, wobei die Vorrichtung umfasst:
- ein Filterelement (EF);
- ein Gehäusebauteil (14), umfassend eine einen Boden (2a) bildende Bodenwand, eine Seitenwand (2b), den Einlass (3) und ein oberes Ende mit einer Öffnung (O2), die durch einen ringförmigen Rand (B2) begrenzt ist, wobei die Öffnung (O2) dem Boden (2a) gegenüberliegt und das Einsetzen des Filterelements (EF) in das Gehäusebauteil (14) ermöglicht;
- einen Deckel (10) zum Verschließen der Öffnung (O2) durch Bildung einer Verbindungsstelle (J) mit dem Rand (B2), wobei der Deckel (10) über eine Scharnierverbindung (8), die ein erstes Befestigungssystem bildet, mit dem Gehäusebauteil (14) verbunden ist, wobei der Deckel einen Teil (P10) zum Verschließen der Öffnung mit einer Oberseite (10a) aufweist, die den Bereich des Verschlussteils (P10) bildet, der am weitesten von der Öffnung (O2) entfernt ist; und
- ein zweites Befestigungssystem mit einem Verschlusselement (V1), von dem ein Teil vom Deckel (10) getragen wird und in einer Verriegelungskonfiguration mit dem Gehäusebauteil (14) zusammenwirken kann, in der der vom Deckel getragene Teil von unten gegen einen im Gehäusebauteil (14) vorgesehenen Eingriffsrand (B11) eingreift;
wobei sich das Verschlusselement (V1) vollständig über die Verbindungsstelle (J) erstreckt und in der Verriegelungskonfiguration eine Klemmwirkung zwischen dem Gehäusebauteil (14) und dem Deckel (10) ausüben kann, wobei das Verschlusselement umfasst:
- einen unteren Verankerungsabschnitt (80) zum Kontakt mit dem Eingriffsrand (B11); und
- einen oberen Betätigungsabschnitt (15), der dazu ausgebildet ist, den unteren Verankerungsabschnitt (80) bevorzugt durch Schwenken zu verschieben, und **dadurch gekennzeichnet, dass** der obere Betätigungsabschnitt (15) nach oben vorsteht und in der Verriegelungskonfiguration näher an der Oberseite des Deckels (10) als an der Verbindungsstelle (J) vorsteht, wobei der obere Betätigungsabschnitt (15) über den Deckel (10) hinausragt, um an der Oberseite dieses Deckels (10) zugänglich zu sein.

2. Vorrichtung nach Anspruch 1, wobei der Auslass (4) an dem Deckel (10) bevorzugt gegenüber der Scharnierverbindung (8) ausgebildet ist, wobei der obere Betätigungsabschnitt (15) ein Klinkenabschnitt ist, der sich über den Auslass (4) und/oder in der Verriegelungskonfiguration überlappend über die Oberseite des Deckels (10) erstreckt.

3. Vorrichtung nach Anspruch 1 oder 2, wobei der Deckel (10) wenigstens auf einer der Scharnierverbindung (8) gegenüberliegenden Seite gewölbt ist und ein Befestigungsmittel (MF1) aufweist, an dem der obere Betätigungsabschnitt (15) schwenkbar angebracht ist,
und wobei der Eingriffsrand (B11) in einem Befestigungsbügel (11) ausgebildet ist, der in einer dem Boden (2a) entgegengesetzten Richtung vorsteht, so dass der Eingriffsrand (B11) vertikal höher als die Verbindungsstelle (J) versetzt ist.

4. Vorrichtung nach einem der vorhergehenden Ansprüche, wobei der untere Verankerungsabschnitt (80) und der obere Betätigungsabschnitt (15) jeweils eine Drahtstruktur, bevorzugt aus Metall, aufweisen und wobei der obere Betätigungsabschnitt (15) zwei Enden (E1, E2) aufweist, die einander zugewandt gebogen sind und in einer Aufnahme aufgenommen sind, die am oberen Befestigungsende eines gerippten Trägers (SN) vorgesehen ist, der als radial vorstehende Erhebung an einer Seitenwand des Deckels ausgebildet ist.

5. Vorrichtung nach Anspruch 4, wenn sie von Anspruch 3 abhängt, wobei der Rippenträger (SN) wenigstens eine Rippe des Deckels umfasst, die sich nach unten erstreckt, vom oberen Befestigungsende aus in Richtung eines Flansches (23) des Deckels (10), der an seinem Umfang von dem Befestigungsbügel (11) außen überlappt wird.

6. Vorrichtung nach einem der vorhergehenden Ansprüche, wobei der Deckel (10) und das Gehäusebauteil (14) ein Gehäuse zur Begrenzung einer Filterkammer bilden und wobei der Auslass (4):
- am Deckel (10) gegenüber der Scharnierverbindung (8) angeordnet ist;
- abgewinkelt ist, so dass ein aus dem Filterelement (EF) austretender gereinigter Luftstrom aus der Filterkammer wieder austreten kann, wobei er auf die gleiche Seite des Gehäuses gerichtet ist wie der Einlass (3).

7. Vorrichtung nach einem der vorhergehenden Ansprüche, die in einer Vertiefung des Deckels einen Bereich (Z2) der Filterkammer umfasst, der ein dem Filterelement (EF) nachgeschalteter Bereich ist, mit dem Auslass (4) in Verbindung steht und zwischen einer Innenfläche des Deckels (10) und einer Auslassfläche (F2) des Filterelements (EF) begrenzt ist,
wobei das Filterelement (EF), das entfernbar in dem Gehäusebauteil (14) aufgenommen ist, Trennmittel (5, 6) aufweist, die dazu ausgebildet sind, Partikel und Staub zurückzuhalten und einen gereinigten Luftstrom (F') in Richtung des Auslasses (4) durchzulassen, und in der Verriegelungskonfiguration tiefer als der Eingriffsrand (B11) angeordnet sind, so dass die Auslassfläche (F2) tiefer als der Eingriffsrand verläuft und sich in einer Vertiefung des Deckels (10) erstreckt.

8. Vorrichtung nach einem der vorhergehenden Ansprüche, wobei das zweite Befestigungssystem das Verschlusselement als erstes Verriegelungselement (V1) umfasst und ein zweites Verriegelungselement (V2) umfasst, das ebenfalls einen unteren Verankerungsabschnitt (80) und einen oberen Rastbetätigungsabschnitt (16) aufweist, das dazu ausgebildet ist, den unteren Verankerungsabschnitt (80) des zweiten Verriegelungselements (V2) bevorzugt durch Schwenken zu verschieben, wobei der Rand (B2) zwei Seiten (21, 22) aufweist, die von einer mit der Scharnierverbindung (8) versehenen Seite (20) getrennt sind, auf denen zwei Aufnahmeteile zum Eingriff mit dem einen bzw. dem anderen der unteren Verankerungsteile (80) des ersten Verriegelungselements (V1) und des zweiten Verriegelungselements (V2) verteilt sind.

9. Verfahren zum Zusammenbau einer Luftfiltervorrichtung (1) nach einem der vorhergehenden Ansprüche, die ein vertikal anzuordnendes Gehäuse (2) umfasst, wobei das Verfahren im Wesentlichen die folgenden Schritte umfasst:
- Begrenzen eines von oben über eine Öffnung (O2) zugänglichen Gehäuses durch ein Gehäusebauteil (14), wobei das Teil (14) ferner einen Befestigungsbügel (11) mit einem höher als die Öffnung (O2) angeordneten Eingriffsrand (B11) aufweist;
- Bewegliches Anbringen eines Deckels (10) über eine Scharnierverbindung (8) an einer Seite des Bauteils (14), wobei diese Seite Teil eines Randes der Öffnung (O2) ist, wodurch das Bauteil (14) und der Deckel (10) das Gehäuse (2) bilden;
- Anordnen von Trennmitteln (5, 6), die wenigstens ein luftdurchlässiges Medium umfassen, in einem durch das Gehäusebauteil (14) begrenzten Innenraum, wobei die Trennmittel (5, 6) in Form eines Filterelements (EF) ausgebildet sind, das durch Einfügen durch die Öffnung (O2) in einem Stück lösbar in den genannten Raum eingesetzt ist, wobei das Filterelement (EF) Partikel und Staub auf der einem am Deckel (10) vorgesehenen Auslass (4) gegenüberliegenden Seite zurückhält ;
- um eine Verriegelung einer geschlossenen Position des Deckels (10) zu ermöglichen, in der die Öffnung (O2) durch einen zum Deckel (10) gehörenden Verschlussteil (P10) abgedeckt ist, schwenkbares Anbringen durch eine Schwenkverbindung (LP) an dem Deckel eines Teils eines Verschlusselements (V1, V2) mit einem unteren Verankerungsabschnitt (80), der unter dem Eingriffsrand (B11) entfernbar eingreift, um einen festen Sitz zwischen dem Gehäusebauteil (14) und dem Deckel (10) unter Quetschen einer umlaufenden Dichtung (J10) der Trennmittel (5, 6) zwischen einer Schulter oder Nut des Bauteils (14) und einem unteren Ende des Deckels (10) aufrechtzuerhalten, wobei die Betätigung des Verschlusselements (V1, V2) durch einen oberen Betätigungsabschnitt (15, 16) des Verschlusselements (V1, V2) ermöglicht wird; und
- Ausbilden des oberen Betätigungsabschnitts (15, 16) mit einer Verbindung zum unteren Verankerungsabschnitt (80) derart, dass der untere Verankerungsabschnitt (80) durch eine auf den oberen Betätigungsabschnitt ausgeübte Betätigung verschiebbar ist, wobei der obere Betätigungsabschnitt (15) in der verriegelten Stellung des Deckels (10) von der Schwenkverbindung (LP) nach oben vorsteht, so dass der obere Betätigungsabschnitt (15, 16) näher an einem Scheitel des Deckels (10) als an der Öffnung (O2) verläuft, wobei dieser obere Betätigungsabschnitt über den Deckel (10) hinausragt, um an der Oberseite dieses Deckels (10) zugänglich zu sein, wenn dieser sich im verriegelten Zustand befindet.

10. Verfahren nach Anspruch 9, wobei der obere Betätigungsabschnitt, der mit einer Drahtstruktur ausgebildet ist, versehen ist mit:
- zwei Enden (E1, E2) der Drahtstruktur, die an der Schwenkverbindung (LP) zueinander gebogen sind und in einer Aufnahme des Deckels (10) entlang einer Seitenwand des Deckels aufgenommen sind, um einen gewölbten Teil des Deckels zu begrenzen; und
- einem starren Betätigungsbügel (18), der einen mittleren Teil der Drahtstruktur umfasst und in Bezug auf die Schwenkverbindung (LP) nach oben und radial nach innen verschiebbar ist.

11. Verwendung eines an einem Gehäusebauteil (14) angelenkten Deckels (10) zum Verriegeln eines geschlossenen Zustands eines Luftfiltergehäuses (2), wobei der Deckel (10) zum Verschließen einer oberen Öffnung (O2) des Bauteils (14) dient, durch die ein Filterelement (EF) in dem Gehäuse angebracht werden kann wobei das Gehäuse (2) vertikal angeordnet und von unten an einem in einem Kraftfahrzeug vorgesehenen Träger befestigt ist,
**dadurch gekennzeichnet, dass** der Deckel (10) über eine Scharnierverbindung (8) mit dem Gehäusebauteil (14) verbunden ist, die ein erstes Befestigungssystem bildet, wobei der Deckel einen die Öffnung (O2) verschließenden Teil (P10) mit einer Oberseite (10a) aufweist, die den von der Öffnung (O2) am weitesten entfernten Bereich des Verschlussteils (P10) bildet, wobei der Deckel (10) ferner mit mehreren Verschlussmitteln (V1, V2, 7) versehen ist, die zu einem zweiten Befestigungssystem gehören, mit dem ein Verschlusszustand des Deckels (10) verriegelt werden kann, wobei:
- sich wenigstens ein Verschlusselement (V1, V2) der Verschlussmittel vollständig über eine Verbindungsstelle (J) zwischen dem Deckel (10) und dem Bauteil (14) erstreckt, und
- eine Klemmung Deckel (10) - Bauteil (14) durch einen unteren Verankerungsabschnitt (80) ausgeübt wird, der zu dem Verschlusselement (V1, V2) gehört und unter einem über der Öffnung (O2) in einem Umfang des oberen Endes des Gehäusebauteils (14) definierten Eingriffsrand (B11) in Kontakt kommt; und
- ein oberer Betätigungsabschnitt (15, 16), der in jedem Verschlusselement (V1, V2) vorgesehen ist, um die Bewegung des unteren Verankerungsabschnitts zu bewirken, nach oben vorsteht und sich näher an der Oberseite (10a) des Deckels (10) erstreckt als an der Verbindungsstelle (J), wobei der obere Betätigungsabschnitt (15) über den Deckel (10) hinausragt, um an der Oberseite des Gehäuses (2) zugänglich zu sein.

## Claims

1. Motor vehicle air filtration device (1), the device including an inlet (3) for the intake of a raw air flow and an outlet (4) for the exhaust of purified air, the device comprising:
- a filter element (EF);
- a housing component (14) having a lower wall forming a bottom (2a), a side wall (2b), said inlet (3) and an upper end with an opening (O2) delimited by an annular edge (B2), the opening (O2) being opposite to the bottom (2a) and enabling the filter element (EF) to be inserted into the housing component (14);
- a cover (10) making it possible to close the opening (O2) by forming a junction (J) with the edge (B2), the cover (10) being connected to the housing component (14) by a hinge connection (8) forming a first attachment system, the cover having a portion (P10) for closing the opening with a top face (10a) that forms the region of the closing portion (P10) that is the furthest away from the opening (O2); and
- a second attachment system provided with a closure element (V1) a part of which is carried by the cover (10) while being able to cooperate with the housing component (14) in a locking configuration in which the part carried by the cover is engaged from below against a gripping edge (B11) provided in the housing component (14);
the closure element (V1) extends entirely above the junction (J) being able to exert, in the locking configuration, a clamping action between the housing component (14) and the cover (10), the closure element including:
- a lower anchoring portion (80) for contact with the gripping edge (B11); and
- an upper actuation portion (15) adapted to move, preferably by pivoting it, the lower anchoring portion (80),
and **characterised in that** the upper actuation portion (15) protrudes upwardly extending, in the locking configuration, closer to the top face of the cover (10) than to the junction (J), the upper actuation portion (15) protruding above the cover (10) to be accessible on the top of this cover (10).

2. Device according to claim 1, wherein the outlet (4) is formed on the cover (10), preferably opposite the hinge connection (8), the upper actuation portion (15) being a ratchet portion that extends above the outlet (4) and/or so as to be overlapping above the cover (10), in the locking configuration.

3. Device according to claim 1 or 2, wherein the cover (10) is cambered at least on one side opposite to the hinge connection (8) and includes a fastening means (MF1) whereon the upper actuation portion (15) is pivotably mounted,
and wherein the gripping edge (B11) is formed in a fastening bracket (11) that protrudes in the direction opposite the bottom (2a), such that the gripping edge (B11) is offset vertically higher than the junction (J).

4. Device according to any one of the preceding claims, wherein the lower anchoring portion (80) and the upper actuation portion (15) each have a wire structure, preferably metallic,
and wherein the upper actuation portion (15) has two ends (E1, E2) curved towards each other that are received in a housing provided at the upper fastening end of a ribbed support (SN) formed as a radially protruding relief on a side wall of the cover.

5. Device according to claim 4 when it depends on claim 3, wherein the ribbed support (SN) includes at least one rib of the cover that extends downwards, from the upper fastening end, in the direction of a flange (23) of the cover (10) that is overlapped externally on the periphery thereof by the fastening bracket (11).

6. Device according to any one of the preceding claims, wherein the cover (10) and the housing component (14) constitute a housing delimiting a filtration chamber, and wherein the outlet (4) is:
- disposed on the cover (10), opposite the hinge connection (8);
- angled, by enabling a flow of purified air coming out of the filter element (EF) to come out of the filtration chamber, while being directed to the same side of the housing as that including the inlet (3).

7. Device according to any one of the preceding claims, including in a recess of the cover an area (Z2) of the filtration chamber that is an area downstream of the filter element (EF), communicating with the outlet (4) and delimited between an inner face of the cover (10) and an outlet face (F2) of the filter element (EF),
wherein the filter element (EF), removably received in the housing component (14), has separation means (5, 6) which are adapted to retain particles and dust by enabling a flow of purified air (F') to pass in the direction of the outlet (4) and disposed lower than the gripping edge (B11) in the locking configuration, so that said outlet face (F2) extends lower than the gripping edge while extending in a recess of the cover (10).

8. Device according to any one of the preceding claims, wherein the second attachment system includes the closure element as a first locking element (V1) and includes a second locking element (V2) also having a lower anchoring portion (80) and an upper ratchet actuation portion (16) adapted to move, preferably by pivoting it, the lower anchoring portion (80) of the second locking element (V2),
wherein the edge (B2) has two sides (21, 22), distinct from one side (20) provided with the hinge connection (8), whereon two receiving parts are distributed, for engaging with one and the other respectively of the lower anchoring portions (80) of the first locking element (V1) and of the second locking element (V2).

9. Method for assembling an air filtration device (1) as defined in any one of the preceding claims and including a housing (2) capable of being vertically disposed, the method comprising the steps essentially consisting in:
- delimiting, by a housing component (14), a housing accessible from above through an opening (O2), the component (14) further having a fastening bracket (11) including a gripping edge (B11) located higher than the opening (O2);
- movably mounting, by a hinge connection (8), a cover (10) on one side of said component (14), this side forming part of an edge of the opening (O2), whereby the component (14) and the cover (10) form the housing (2);
- having separation means (5, 6), comprising at least one air-permeable medium, in an inner compartment delimited by the housing component (14), the separation means (5, 6) being made in the form of a filter element (EF) removably mounted and in one-piece in said compartment by insertion throughout the opening (O2), the filter element (EF) allowing retaining particles and dust on the side opposite to an outlet (4) provided on the cover (10);
- in order to enable locking of a closed position of the cover (10), in which the opening (O2) is covered by a closing portion (P10) belonging to the cover (10), attaching on the cover (10), by a pivot connection (LP), a part of a closure element (V1, V2) having a lower anchoring portion (80) engaging under the gripping edge (B11) removably to keep a clamping between the housing component (14) and the cover (10) with a crushing of a peripheral seal (J10) of the separation means (5, 6) between a shoulder or groove of the component (14) and a lower end of the cover (10), bearing in mind that the actuation of the closure element (V1, V2) is enabled by an upper actuation portion (15, 16) of the closure element (V1, V2); and
- configuring the upper actuation portion (15, 16) with a connection to the lower anchoring portion (80), so as to be able to move the lower anchoring portion (80) by an action exerted on the upper actuation portion, while having the upper actuation portion (15) protruding upwardly from the pivot connection (LP) in the locked state of the cover (10), so that the upper actuation portion (15, 16) extends closer to a top of the cover (10) than the opening (O2), this upper actuation portion protruding above the cover (10) to be accessible on top of this cover (10) when the latter is in the locked state.

10. Method according to claim 9, wherein the upper actuation portion, designed with a wire structure, is disposed with:
- two ends (E1, E2) of the wire structure curved towards each other at the pivot connection (LP), received in a housing of the cover (10) along a side wall of the cover making it possible to delimit a curved part of the cover; and
- a rigid actuating handle (18) including an intermediate portion of the wire structure and that is capable of being offset higher and radially inwards relative to the pivot connection (LP).

11. Use of a cover (10) hinged on a housing component (14) to lock a closed state of an air filter housing (2), wherein the cover (10) serves to close an upper opening (O2) of said component (14) through which a filter element (EF) can be mounted internally in the housing, the housing (2) being vertically disposed by being fastened from below to a support provided in a motor vehicle, **characterised in that** the cover (10) is connected to the housing component (14) by a hinge connection (8) forming a first attachment system, the cover having a portion (P10) for closing the opening (O2) with a top face (10a) that forms the region of the closing portion (P10) that is the furthest away from the opening (O2), the cover (10) further being provided with a plurality of closure means (V1, V2, 7) belonging to a second attachment system making it possible to lock a closing state of the cover (10) wherein:
- at least one closure element (V1, V2) of the closure means extends entirely above a junction (J) between the cover (10) and the component (14), and
- a cover (10) - component (14) clamping is exerted by a lower anchoring portion (80) belonging to said closure element (V1, V2) and coming into contact under a gripping edge (B11) defined above the opening (O2) in a periphery of the upper end of the housing component (14); and
- an upper actuation portion (15, 16), provided in each closure element (V1, V2) to cause the lower anchoring portion to move, protrudes upwardly extending closer to the top face (10a) of the cover (10) than the junction (J), the upper actuation portion (15) protruding above the cover (10) to be accessible on the top of the housing (2).
